# EUROPEAN PATENT APPLICATION

(11) **EP 1 967 654 A1**
(43) Date of publication of application: **10.09.2008**
(21) Application number: 06835033.9
(22) Date of filing: 20.12.2006
(51) Int. Cl.: E02B 15/00, B63B 35/34, B63B 35/38, C02F 1/00

(54) **WATER FLOAT AND CONNECTED SYSTEM THEREOF**

(30) Priority: 26.12.2005 JP 2005372274
(71) Applicant: Kureha Engineering Co., Ltd., Iwaki-shi, Fukushima-Ken 974-8232 (JP)
(72) Inventor: SUZUKI, Yukimasa, c/o KUREHA ENGINEERING CO., LTD., (JP); ITOH, Akihiro, c/o KUREHA ENGINEERING CO., LTD., Iwaka-shi, Fukushima-Ken 974-8232 (JP)
(74) Representative: Banzer, Hans-Jörg
(86) International application number: PCT/JP2006/325413
(87) International publication number: WO 2007/074698

(57) **Abstract**

A water float is formed by fixedly sandwiching a plurality of foamed resin members spaced apart from each other in a plane, with a pair of surface sheets of thermoplastic resin. The thus-formed water float of a large area may suitably be floated on water surfaces of lakes or ponds, pools, dams, rivers and seas, for preventing deterioration of water qualities due to occurrence of mosses, such as water-bloom; or as bases for installing thereon view facilities such as illuminations, advertisement media and solar batteries. A plurality of the water floats may be disposed in a plane and connected with each other so as to form a water float connection system of a larger area.

## Description

### TECHNICAL FIELD

The present invention relates to a water float and a connection system thereof (which may be inclusively referred to as a water float) which may be floated on water surfaces of lakes or ponds, pools, dams, rivers and seas, for preventing deterioration of water qualities due to occurrence of mosses, such as water-bloom; or as bases for installing thereon view facilities such as illuminations, advertisement media and solar batteries.

### BACKGROUND ART

There is known a method of preventing occurrence of mosses, such as water-bloom, by floating a light-screening water float on a sedimentation pond in a water purification plant (Patent Document 1 listed below). Further, for the purpose of preventing growth of mosses such as water-bloom by floating a light-screening water float on a water surface of not only a water purification plant but also a lake, a pond or the like, there has been also proposed a method of using a gathering of floating light-screening members in order to attain a desired light-screening rate (Patent Document 2 below). Such water floats proposed hitherto in the art are of relatively small areas, and no special means for covering larger areas have been contrived.

In contrast to the above, there have been proposed water floats for installing thereon solar batteries which are desirably of relatively large areas from the view point of efficiency (Patent Documents 3 and 4 listed below, etc.). However, such water floats have been made in large areas by connecting float units of a relatively small area with metal-made connection members (Patent Document 3 below) or with combinations of a resin-made brim-like connection member and a fastening member such as a cord or a rope (Patent Document 4 below), so that a large number of connection members are required in order to form a large area of float(-connection system) and the connection operation becomes troublesome. As a result, it becomes difficult to economically produce a large-area water float, a large-area solar photovoltaic generation apparatus, etc.
Patent Document 1: JP-A 3-26306
Patent Document 2: JP-A 2000-263034
Patent Document 3: JP-A 2003-209274
Patent Document 4: JP-A 2004-63497

### DISCLOSURE OF INVENTION

Accordingly, a principal object of the present invention is to provide a water float(-connection system) adapted to formation of a large-area water float.

As a result of study with the above-mentioned object, the present inventors have noted that a foamed resin member, which has been conventionally used as forming a float unit, is not suitable for production in a large area in view of a production process thereof and also of structural strength and rigidity, but the formation of a thermoplastic resin sheet in a large area suffers from little restriction from the viewpoints of structural strength and production process by formation in a large length even if some restriction may be posed with respect to enlargement of a width thereof. Consequently, the present inventors have arrived at a conclusion that a combination of these members, more specifically a structure obtained by fixing a plurality of foamed resin members between a pair of thermoplastic resin sheets, is optimum for formation of a large-area water float.

The water float according to the present invention is based on the above knowledge and, more specifically, comprises: a plurality of foamed resin members spaced apart from each other in a plane, and a pair of surface sheets of thermoplastic resin fixedly sandwiching the plurality of foamed resin members.

The present invention further provides a water float connection system comprising a plurality of water floats formed in the above-described manner and connected with each other to provide a larger area of water float, thereby providing a water float connection system having a connection structure improved in strength. More specifically, the water float connection system according to the present invention comprises a plurality of the above-mentioned water floats disposed adjacent to each other and connected to each other in a plane; and includes a connection structure (A) wherein a pair of mutually adjacent water floats among the plurality have mutually adjacent fringes comprising respective successions of spaced tubes of thermoplastic resin engaged with each other, and an elongated connection member is inserted through the engaged tubes to connect the adjacent pair of water floats; or (B) wherein a pair of mutually adjacent water floats among the plurality have mutually adjacent peripheral members each comprising a foamed resin member and a pair of surface sheets of thermoplastic resin fixedly sandwiching the foamed resin member, and the adjacent peripheral members are indirectly and/or directly connected with each other to connect the adjacent pair of water floats.

### BRIEF DESCRIPTION OF THE DRAWINGS

Fig. 1 is a partially cut plan view of a first embodiment of the water float connection system of the invention.
Fig. 2 is a partially enlarged view of part II of Fig. 1.
Fig. 3 is a sectional view along a III - III line as viewed in a direction of arrows in Fig. 2.
Fig. 4 is a sectional view along a IV - IV line as viewed in a direction of arrows in Fig. 2.
Fig. 5 is a sectional view along a V - V line as viewed in a direction of arrows in Fig. 2.
Fig. 6 is a sectional view corresponding to Fig. 4 and showing a connection structure for connecting adjacent water floats adopted in a second embodiment of the water float connection system of the invention.
Fig. 7 is a sectional view corresponding to Fig. 5 and showing an outermost periphery structure adopted in the second embodiment of the water float connection system of the invention.

### BEST MODE FOR PRACTICING THE INVENTION

Hereinbelow, the present invention will be described more specifically with reference to preferred embodiments thereof.

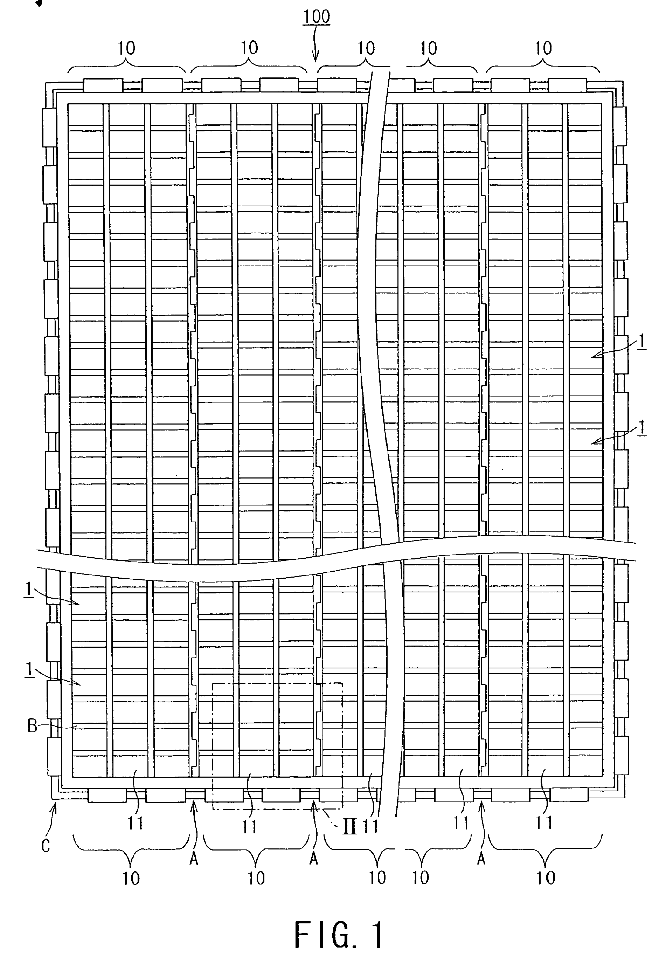

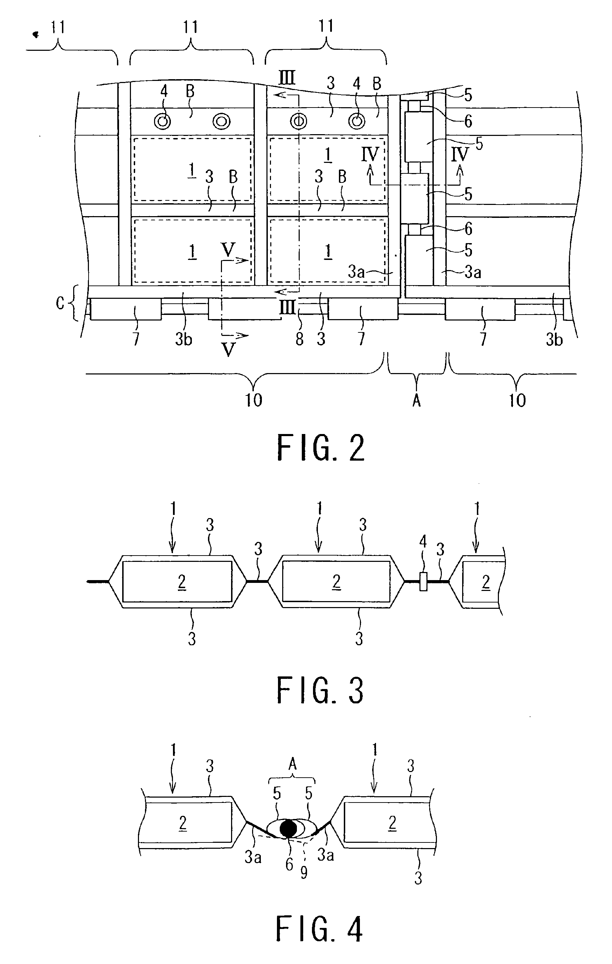

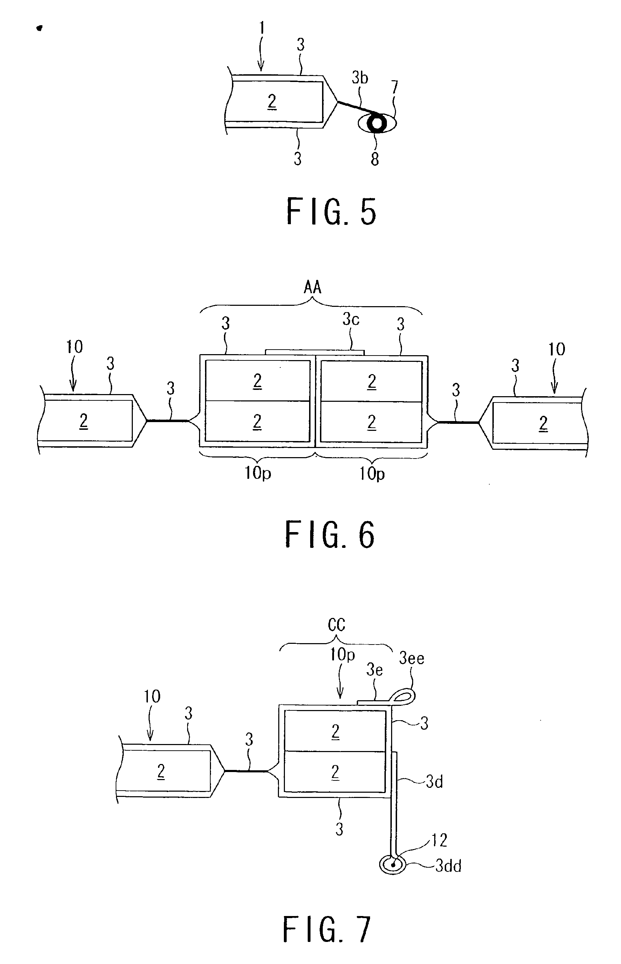

Fig. 1 is a partially cut plan view of a first embodiment of the water float connection system of the invention; Fig. 2 is a partially enlarged view of part II of Fig. 1; Fig. 3 is a sectional view along a III - III line as viewed in a direction of arrows in Fig. 2; Fig. 4 is a sectional view along a IV - IV line as viewed in a direction of arrows in Fig. 2; and Fig. 5 is a sectional view along a V - V line as viewed in a direction of arrows in Fig. 2.

Referring to Figs. 1 - 5, the water float connection system 100 has a structure including a plurality (5 in this embodiment) of vertically elongated water floats 10 each corresponding to an embodiment of the water float of the present invention connected successively via connection parts A. Each water float 10 comprises a plurality (3 in this embodiment) of elongated members 11 of a narrower width, and each elongated member 11 comprises a plurality (28 in this embodiment) of float units 1. Consequently, in this embodiment, the water float connection system 100 comprises totally 5 × 3 × 28 = 420 float units covering a total area of ca. 600 m².

As better shown in sectional views of Figs. 3 - 5, each float unit 1 has a structure including a foamed resin member 2 fixedly sandwiched between a pair of surface sheets 3. In other words, each water float 10 comprises a plurality (28 × 3 = 84 in this embodiment) of foamed resin members 2 and a pair of surface sheets 3 fixedly sandwiching the foamed resin members 2. In view of the object of the present invention of providing a large-area water float of a simple structure, it is generally preferred that a water float 10 comprises at least 4, particularly 10 - 200, foamed resin members 2.

The foamed resin member 2 may preferably comprise a foamed member of a thermoplastic resin, such as polystyrene or polyethylene, having a specific gravity of at most 0.3, more preferably 0.01 - 0.1 (corresponding to a foaming ratio of 100 times to 10 times) and a thickness on the order of 10 - 200 mm. Polystyrene is particularly preferred and, while foamed polystyrene obtained through expansion of beads can also be used, an extruded polystyrene foam is more preferably used because it provides a foam sheet of a relatively large area and a high strength.

The thermoplastic resin forming a pair of surface sheets 3 may comprise, e.g., polyvinyl chloride resin, polyethylene resin, polypropylene resin or polyarylene sulfide resin, and may also preferably comprise polyvinylidene fluoride resin which is excellent in weather resistance. For the purpose of providing an improved strength, it is preferred to reinforce the surface sheet 3 with fiber of, e.g., polyester or nylon, or a cloth of such fiber. The surface sheets may suitably have a thickness of ca. 0.3 - 3 mm, preferably ca. 0.5 - 1.5 mm. For the purpose of effectively taking advantage of productivity of thermoplastic resin sheet constituting the surface sheets 3 in a large length, it is preferred that at least one side of surface sheet is formed in a length (or longer axis) / width (or shorter axis) ratio of at least 2, particularly ca. 4 - 20. In view of the processability, the other side of surface sheet 3 can be formed in a smaller area or a smaller length, and a plurality thereof can be used so that each piece of surface sheet is used to cover the foamed resin members 2 in a plurality which is smaller than the number (84 in the above embodiment) constituting the entire water float 10 so as to fixedly sandwich the whole foamed resin members 2 together with a surface sheet 3 on the opposite side.

In order to have a pair of surface sheets 3 fixedly sandwich a plurality of foamed resin members 2, there may be adopted a method of bonding the surface sheets 3 to each other at parts between the foamed resin members 2 disposed spaced apart from each other by appropriate means, such as melt-bonding with high-frequency heating or welding, partial dissolution bonding with a solvent, or a method of sewing them with each other. More preferably, it is desired that at least 50 %, more preferably 80 % or more, of the upper and lower surface sheets are bonded by the use of a solvent or heat-melting of a surface sheet/ surface sheet boundary and/or a surface sheet/foamed resin member boundary. Speaking it with a reverse expression, the bonding between the surface sheets and the surface sheet/foamed resin member boundary need not be performed on the entire area as far as the bonding strength at the boundaries is ensured. Further, as the connection between the surface sheets by bonding or sewing of the surface sheets to or with each other is easy, a water float 10 can also be formed by adjacently arranging a plurality of structures each formed by fixedly sandwiching plural foamed resin members spaced apart from each other in a plane with a pair of surface sheets side by side and bonding or sewing them at their mutually adjacent marginal portions. (In Production Examples described hereinafter, 3 elongated members 11 each having a structure of fixedly sandwiching plural foamed resin members spaced apart from each other in a plane with a pair of surface sheets were melt-bonded to each other at their side marginal portions to form a water float 10.)
As shown in Figs. 2 and 3, in this embodiment, for every 2 rows of laterally disposed float units 1, a pair of surface sheets 3 forming a connection part B are provided with water-discharge holes 4 so as to discharge rain water standing on the water float 10 and discharge air stagnant below the water float 10, thereby stably holding the water float 10 on the water surface.

Further, at connection parts A each disposed at mutually adjacent fringes 3a, tubular members 5 (in Figs. 2 and 4) each having a succession of spaced-apart tubes of thermoplastic resin are disposed in engagement with each other in a mutually engaged teeth-to-teeth fashion, wherein each tubular member 5 in this embodiment is formed by turning back and bonding marginal portion 3a of thermoplastic resin forming a surface sheet 3 to the surface sheet 3. However, such tubular members 5 can also be formed by bonding separately formed tubes onto the margins 3a. Then, an elongated connection member 6 is inserted through plural tubes 5 disposed in a direction of extension of the water floats 10 to connect the mutually adjacent pair of water floats 10, thereby forming the connection part A. The elongated connection member 6 may preferably comprise a metal-made elongated member, such as a wire, a rope, a rod or a pipe. The above-described connection structure has been adopted based on a knowledge that a connection structure adopted in Patent Document 4 comprising a pair of successively spaced float tongues of thermoplastic resin sheets respectively attached to a pair of adjacent floats and engaged with each other in an engaged teeth-to-teeth fashion between the adjacent floats, wherein the float tongues are provided with connecting holes through which a string member, such as a rope, a wire or a chain is inserted and passed to connect the tongues, is accompanied with a difficulty in breakage of the float tongues because of stress concentration at the connection holes due to application of energies of wind and waves via the string member.

At the outermost periphery C (shown in Figs. 2 and 4) of the thus-formed water float connection system 100, tubes 7 of thermoplastic resin are disposed, through which a fastening member 8 of floating pipe or/ and bar is inserted to define an outer peripheral shape of the water float connection system 100 while preventing the sinking of the outer peripheral part.

The tubes 7 may be formed by turning back and bonding a marginal portion 3b of a surface sheet 3 constituting the water float 10 onto the surface sheet 3 or bonding separately formed tubes onto the marginal portion 3b similarly as the tubes 5 forming the connection part A. The fastening or connection member 8 comprising a pipe or a bar may comprise either a resin or a metal as far as it can float on the water, and may have an arbitrary sectional shape, such as a circle or a rectangle. Particularly, a pipe structure configured to prevent the intrusion of water thereto as by sealing up both ends or having both ends stand up above the water level, is suitable so as to provide an appropriate buoyancy to the outer peripheral part C of the water float connection system 100. It is also possible to further dispose a floating pipe or bar having an arbitrary sectional shape of a circle, a rectangle, etc., around the outer periphery, as desired, from the viewpoint of protection of the outer periphery or/and ease of operation.

Further, it is also preferred to provide, as desired, at least one of the pair of adjacent water floats at the connection part A with a free marginal edge portion 9 extending between the pair of water floats or the outer periphery of the water float connection system with a free marginal edge portion (not shown) extending outside the outer periphery, so as to prevent irregular floating of the water float (connection system) due to intrusion of wind between the water float (connection system) and the water surface. Such a free marginal edge portion can be formed of a marginal edge portion of a thermoplastic resin sheet similar to the surface sheet 3.

In the above, the water float (connection system) of the present invention has been described with reference to a preferred embodiment thereof. However, various modifications are possible within the scope of the present invention. For example, in the above-described embodiment, each water float 10 is formed by disposing the foamed resin members 2 spaced apart in 3 columns between a pair of surface sheets 3, but it is also possible to dispose the foamed resin member in 1 column or 2 columns, or more than 3 columns of foamed resin members within an extent of allowing the processability in manufacturing, transportation and disposition.

Further, the above-described embodiment is directed to a larger area of water float connection system 100 formed by connecting a plurality of water floats 10, but the water float 10 can be used singly. In this instance, such a water float 10 may be provided with an outer peripheral part C comprising tubes 7 of thermoplastic resin, through which a floating pipe or/ and bar to define the outer shape thereof while preventing the sinking of the outer peripheral part.

To the contrary, a plurality of the water float connection system 100 with or without the peripheral part C thereof can be arranged adjacent to each other longitudinally and/or laterally, so that adjacent water float connection systems 100 are connected by a structure similar to the connection part A or by using a connection member such as a rope with the remaining peripheral parts, to provide a water float connection system of a further large area.

Further, as adopted in a second embodiment of water float connection system 100 described below, a structure of Fig. 6 can be adopted instead of the one of Fig. 4 as a sectional structure of connection part between adjacent water floats 10 and a structure of Fig. 7 instead of the one of Fig. 7 as a sectional structure of the outermost periphery of the water float connection system 100.

More specifically, a connection part AA shown in Fig. 6 has a structure including a pair of floating peripheral members 10p each having a structure similar to the water float 10 and formed by fixedly sandwiching (superposed two sheets, in this embodiment, of) foamed resin member 2 between a pair of surface sheets 3 of thermoplastic resin and formed by connecting the peripheral members 10p by superposing and melt-bonding a connecting thermoplastic resin sheet 3c onto the peripheral members 10p. Instead of indirect connection using such a connecting thermoplastic resin sheet 3c, it is also possible to directly connect the peripheral members 10 with an adhesive agent applied onto mutually abutted surfaces between the peripheral members 10p. Incidentally, the surface sheet 3 fixedly sandwiching the foamed resin member 2 need not be disposed over the entire area but can be formed in a smaller area, as desired, as far as the integrity of the peripheral member 10p is ensured.

An outermost peripheral sectional structure CC shown in Fig. 7 has a structure including a peripheral member 10p formed adjacent to the outer periphery of a water float connection system 100 and having a structure similar to that of the water float 10 described with reference to Fig. 6 and formed by melt-bonding onto the outer surface of the peripheral member 10p a membrane-form thermoplastic resin sheet 3d extending downward into the water, turning back and melt-bonding a lower end thereof to form an annular portion 3dd, and inserting a stainless wire 12 functioning as a weight or a sinker through the annular portion 3dd.

Throughout Figs. 6 and 7, the peripheral member 10p (or the connection part AA formed by connection of two of them) functions as a passage or a foothold providing a buoyancy so as to allow an operator to walk thereon and make a repairing action while standing thereon. Further, the membrane-like thermoplastic resin sheet 3d melt-bonded onto the outer surface of the peripheral member 10p disposed at the outermost periphery of the water float connection system 100 functions to suppress the irregular floating of the system due to the wire sinker 3 disposed at the lower end thereof and effectively reducing the liability of overturning or irregular floating of the system 100 due to blowing-in of wind from outside owing to its membrane form. Such an irregular floating-prevention structure including a membrane-form thermoplastic resin sheet 3d extending downward can also be disposed at the outside of individual floats 10 forming a connection system or a float 10 used singly.

Incidentally, to an upper right part of the peripheral member 10p shown in Fig. 7 is melt-bonded a connecting member 3e including an annular portion 3ee formed by turning back and melt-bonding an end portion of a thermoplastic resin sheet. When a float having a peripheral member 10p having a symmetrical structure including an annular portion 3ee is disposed on the right side, a steel wire, etc., may be inserted through the annular portions 3ee disposed to be engaged with each other on the left and right sides to connect the floats 10 on the left and right sides. This connection structure can be used instead of the connecting part AA shown in Fig. 6. Such a connection structure using a connecting member 3c (Fig. 6) or 3e (Fig. 7) provides an advantage of facilitating a field operation between a pair of floats already set on the water surface.

### EXAMPLES

### (Example 1)

A water float connection system 100, of which the outline has been described with reference to Figs. 1 - 5, was produced in the following manner.

On a surface sheet 3 having planar sizes of ca. 30 m-L × 2 m-W, 28 foamed resin members 2 of extrusion foam polystyrene having planar sizes of ca. 1200 mm × ca. 930 mm and a thickness of ca. 30 mm ("MIRAFOAM", made by K.K. JSP) were disposed in a column with a spacing of ca. 130 mm between adjacent foamed resin members and melt-bonded onto the surface sheet by high-frequency welding, and further thereon a surface sheet 3 was melt-bonded to prepare an elongated member 11. At positions between adjacent foamed resin members, the pair of surface sheets directly contacted each other and melt-bonded with each other by high-frequency welding at the positions to form connection parts B. Further, every other row of connection parts B was provided with water-discharge holes 4 by boring. Further, 3 columns of elongated members 11 were welded with each other at their mutually adjacent sides to prepare an integral water float 10. In this instance, the water float was composed of 84 (= 28 × 3) float units 1. Incidentally, the surface sheet 3 was a ca. 1 mm-thick multi-layer sheet formed by reinforcing a polypropylene sheet with an ethylene-propylene rubber component and further with polyester fiber ("SG-SHEET", made by Tsutsunaka Sheet Bousui K.K.).

The thus-formed water floats 10 each having 84 float units were partially cut off at side margins 3a and upper and lower margins 3b so as to alternately form projections of ca. 600 mmL × ca. 70 mmW and recesses at the side margins 3a and alternately form projections of ca. 1300 mmL × ca. 220 mmW and recesses at the upper and lower margins 3b, and the projections were turned back and bonded to the margins by high-frequency welding to form tubes 5 and 7. Then, 5 columns of elongated water floats 10 thus provided with intermittently formed tubes 5 on both side margins were disposed longitudinally in parallel so that their tubes 5 were engaged with each other at their mutually adjacent sides, and 10 mm-dia. round rods 6 of SUS304 were each inserted through the engaged tubes 5 to form connection parts A between adjacent water floats 10 to roughly form a water float connection system 100. Then, a SUS304-made pipe of 48.6 mm in outer diameter and 1.5 mm in thickness was inserted through intermittently formed tubes 5 remaining at both side margins and intermittently formed tubes 7 at the upper and lower side margins of the system 100, and both ends of the pipe were sealed up to complete a water float connection system 100 having a floating outer peripheral part C. Further, at a lower side of the tubes 5 at the connection part A, and at lower sides of the tubes 5 and the tubes 7 at the connection part C, a multi-layer thermoplastic resin sheet similar to the one constituting the surface sheet 3 was bonded to the water floats 10, thereby forming free ends 9 extending from the water floats 10 so as to prevent irregular floating of the water float connection system due to blowing-in of wind to a space between the water float connection system and the water surface below the system.

In the above-described manner, a water float connection system 100 having a structure as described with reference to Figs. 1 - 5 and a total area of ca. 600 m² was formed. The thus-formed water float connection system 100 allowed easy assembling in the field in a short time, thus exhibiting excellent processability and manufacturing cost, since the water floats thereof were produced preliminarily as by melt-bonding in a factory up to sizes allowing transportation and installation operation. Further, as the floats per se were light in weight and bonded parts therein and connection parts therebetween were flexible, and also as the bonded parts and connection parts were connected in a plane, the water float connection system could withstand one year or longer of field trial.

### (Example 2)

A water float connection system was produced in the same manner as in Example 1 except for adopting a connection structure AA between water floats shown in Fig. 6 and an outermost peripheral structure shown in Fig. 7 instead of those shown in Figs. 4 and 5.

A ca. 30 mm-thick foamed resin member 2 ("MIRAFOAM", made by K.K. JSP) identical to the one used in Example 1 was cut into widths of ca. 300 mm each, and two of the thus-cut foamed resin members 2 were superposed with each other and fixedly welded between a pair of surface sheets (made by Tsutsunaka Sheet Bousui K.K.) identical to those used in Example 1, to prepare each peripheral member 10p. At the outer periphery of the water float connection system shown in Fig. 7, a surface sheet 3d comprising a similar material was welded onto the outer surface of the peripheral member 10p so as to extend downward, and at a lower end thereof ca. 50 mm below the water surface, a 5 mm-dia. wire of stainless steel functioning as a sinker was inserted.

The thus-obtained water float connection system exhibited similar performances as the one described in Example 1, and moreover allowed simple material and structure including connection parts and provided better processability in the repairing and stability against wind and waves since peripheral members 10p similar to the water floats 10 were disposed between the floats and at the outer periphery of the water float connection system.

### INDUSTRIAL APPLICABILITY

As described above, according to the present invention, there are provided a water float and a connection system thereof, which may be floated on water surfaces of lakes or ponds, pools, dams, rivers and seas, for preventing deterioration of water qualities due to occurrence of mosses, such as water-bloom; or as bases for installing thereon view facilities such as illuminations, advertisement media and solar batteries. The water float and connection system thereof can be formed in a structurally reasonable manner by effectively utilizing the technology for manufacturing elongated thermoplastic resin sheets.

## Claims

1. A water float, comprising: a plurality of foamed resin members spaced apart from each other in a plane, and a pair of surface sheets of thermoplastic resin fixedly sandwiching the plurality of foamed resin members.

2. A water float according to Claim 1, wherein at least 4 foamed resin members are fixedly sandwiched between the pair of surface sheets.

3. A water float according to Claim 1 or 2, wherein the surface sheets of thermoplastic resin at parts between foamed resin members are provided with water-discharge holes.

4. A water float according to any one of Claims 1 - 3, wherein a floating peripheral member having a surface at least partially comprising thermoplastic resin is formed adjacent to an outer periphery of the water float so as to define an outer peripheral shape.

5. A water float according to Claim 4, wherein tubes of thermoplastic resin are disposed along the outer periphery and a floating fastening member is inserted through the tubes to form the floating peripheral member.

6. A water float according to Claim 5, wherein the tubes are formed by turning-back of a thermoplastic resin sheet.

7. A water float according to Claim 4, wherein the floating peripheral member is formed by fixedly sandwiching a foamed resin member with a pair of surface sheets of thermoplastic resin and is disposed along the outer periphery to define an outer peripheral shape.

8. A water float according to any one of Claims 1 - 7, provided with a peripheral portion extending from an outer periphery of the water float so as to prevent irregular floating of the water float due to intrusion of wind between the water float and a water surface therebelow.

9. A water float according to Claim 8, wherein the peripheral portion extending from the outer periphery is a membrane extending downward and having a lower end provided with a sinker.

10. A water float connection system, comprising: a plurality of water floats according to any one of Claims 1 - 3 disposed adjacent to each other and connected to each other in a plane, wherein a pair of mutually adjacent water floats among the plurality have mutually adjacent fringes comprising respective successions of spaced tubes of thermoplastic resin engaged with each other, and an elongated connection member is inserted through the engaged tubes to connect the adjacent pair of water floats.

11. A water float connection system according to Claim 10, wherein the tubes of thermoplastic resin are formed by turning-back of a thermoplastic resin sheet.

12. A water float connection system, comprising: a plurality of water floats according to any one of Claims 1 - 3 disposed adjacent to each other and connected to each other; wherein a pair of mutually adjacent water floats among the plurality have mutually adjacent peripheral members each comprising a foamed resin member and a pair of surface sheets of thermoplastic resin fixedly sandwiching the foamed resin member, and the adjacent peripheral members are indirectly and/or directly connected with each other to connect the adjacent pair of water floats.

13. A water float connection system according to any one of Claims 10 - 12, wherein a floating peripheral member having a surface at least partially comprising thermoplastic resin is formed adjacent to an outer periphery of the system to define an outermost peripheral shape thereof.

14. A water float connection system according to Claim 13, wherein tubes of thermoplastic resin are disposed along the outer periphery and a floating fastening member is inserted through the tubes to form the floating peripheral member.

15. A water float connection system according to Claim 14, wherein the tubes are formed by turning-back of a thermoplastic resin sheet.

16. A water float connection system according to Claim 13, wherein the floating peripheral member is formed by fixedly sandwiching a foamed resin member with a pair of surface sheets of thermoplastic resin and is disposed along the outer periphery to define an outermost peripheral shape.

17. A water float connection system according to any one of Claims 10 - 16, provided with an edge portion extending from at least one of an adjacent pair of water floats and extending between the adjacent pair of water floats and/or a peripheral portion extending from an outer periphery of the water float connection system so as to prevent irregular floating of the water float connection system due to intrusion of wind between the system and a water surface therebelow.

18. A water float connection system according to Claim 17, wherein the peripheral portion extending from the outer periphery of the water float connection system is a membrane extending downward and having a lower end provided with a sinker.
